# EUROPEAN PATENT SPECIFICATION

(11) **EP 2 888 177 B1**
(45) Date of publication and mention of the grant of the patent: **15.11.2017**
(21) Application number: 12753400.6
(22) Date of filing: 24.08.2012
(51) Int. Cl.: B65D 33/16

(54) **CLIP CLOSURE**
CLIPVERSCHLUSS
DISPOSITIF DE FERMETURE PAR SERRAGE

(43) Date of publication of application: 01.07.2015
(73) Proprietor: Ecker, Martin, 85375 Grüneck (DE)
(72) Inventor: Ecker, Martin, 85375 Grüneck (DE)
(74) Representative: SR Huebner - Munich Patentanwaltspartnerschaft mbB
(86) International application number: PCT/EP2012/003588
(87) International publication number: WO 2014/029408

(56) References cited:
- EP-A1- 0 533 974
- DE-A1-102004 018 589
- DE-U1- 9 104 600
- DE-U1-202006 003 686
- US-A- 4 847 956
- US-A1- 2005 120 521

## Description

### Field of invention

This invention relates to a clip closure for a bag according to the preamble of claim 1.

### Background of the invention

From the German patent DE 10 2004 018 589 B4 a clip closure for a bag having adjustable clamping means which have an open position and a closed position, the clamping means in their open position being placeable over the open end section of a bag and in their closed position surrounding and trapping said open end section in the style of a collar, is known. The clamping means of said invention comprise a first and a second clamping element which are pivotably hinged to each other so that they can accommodate said open end section of said bag in the open position of the clamping means and so that they can clamp said open end section of said bag between each other in the closed position in a clamping gap formed between the first clamping element and the second clamping element. Furthermore the clip closure has locking means for locking the clamping means in the closed position.

The US-Patent 6,058,572 A reveals a clip closure for plastic bags or the like. It comprises a pair of generally co-extensive axially extending jaws, one said jaw having a channel extending there along, and the other said jaw having a rip standing out therefrom. Hinge means make it possible to unite said jaws adjacent at one axial end thereof whereby said jaws are rotatable into a closed, mutually confronting relationship with said rip interleaved within said channel and latch means disposed adjacent the actual end of said jaws in opposed relation to said hinge means for releasably latching said jaws in said closed position.

Document WO 02/076836 shows a molded clip having a cooperating latch element disposed at the forward ends of jaws permitted to rotate between a closed position and an open position. Jaws are interconnected at a rearward end by a hinge structure and at their forward end by a releasable latch. The jaws are provided adjacent their rearward ends with cooperating shoulder means independent of said hinge bearing to restrict relative axial

### CONFIRMATION COPY

movement of said jaws under reactive forces created by the closure of said jaws about an object.

German utility model DE 91 04 600 U1 describes a clip closure for bags or sacks with two dimensionally stable clamping jaws that are pivotally connected at one end and that can be locked at the other end, wherein one clamping jaw comprises a bar with a plurality of latch engagements protruding in the direction towards the other clamping jaw, and wherein the other clamping jaw is equipped with at least one ratchet tooth that may engage in different angular positions with the latch engagements for locking the two clamping jaws.

US Patent Application US 2005/120521 A1 describes a plastic clip comprising two jaws united at one end by a hinge permitting them to swing between open and closed positions. The hinge may suitably be of the box type including a hinge blade associated with one jaw that is mounted between opposed cheeks associated with the other jaw by a hinge pin received in an elongated bearing opening in the cheeks, and along which the pin may travel to adjust the nip of the jaws. A spring latch at the opposite end of the jaws preferably permits a plurality of latching positions so as to permit the nip of the jaws at that end to be varied. The elongated bearing opening may permit the assembly of the jaws even where the box structure is relatively rigid and where the pin is integrally formed with the hinge blade.

German utility model DE 20 2006 003 686 U1 describes a clip closure for closing freezer bags, storage bags and similar containers, wherein the jaws 2 and 3 connected by a hinge 7 can be closed by pressing together the locking element 6, with the locking element comprising a plurality of teeth.

### Objects of the invention

It is a prime object of the invention to improve a clip closure of the initially mentioned type. Further objectives become apparent from the following description.

### Description of the invention

The primary objective of the invention is solved by a clip closure according to claim 1. If the clamping means feature two or more closed positions in which they can be locked which are characterized by different widths of the clamping gap, bags can be securely closed using a single clip closure regardless of the width of the open end section of the bag. The user may select that closed position from the plurality of possible closed positions which provides the correct clamping gap for each individual bag. A single clip closure then can be used to close in principle any type of bag, for example bags made of paper, of rubber, of wool and of plastic. Furthermore, previously it was necessary to have an individual clip closure with a single predetermined gap width for each type of bag. From now on, due to the multiple locking positions at two or more closed positions, only a single clip closure is needed. Thus needed storage room may be reduced as the number of individual clip closures may be reduced. This may as well be advantageous concerning aspects of environmental protection; a large number of clip closures may consume a high amount of natural resources which now may be preserved. These and other aspects of the invention will be described in relation to preferred embodiments of the invention which are illustrated by the drawings annexed hereto.

### Preferred embodiments of the invention

It is preferred that the locking means can lock the clamping means in any of the closed positions. To allow this, it is preferred that the first clamping element is of an elongate rectangular shape. Furthermore it is preferred that the second clamping element is of an elongate rectangular shape. Thus it may be especially easy to lock such clamping means. Providing locking means that can lock the clamping means in any of the closed positions may have the advantage that a tight lock of the bag in any of the multiple closed positions can be possible. Preferably one single pair of locking means is provided for that purpose. This may allow easier handling and may lower costs. Alternatively, multiple locking means are provided, preferably multiple pairs of locking means. For example, one distinct pair of locking means may be provided for locking the clamping means in each of the closed positions. An achievable advantage of this can be that each of the locking means may be made of different materials depending on the necessary force expected to seal a bag at each individual lockable closed position. The locking means comprise one or more latch elements and two or more latch engagements which can interact with each other in order to lock the first clamping element to the second clamping element. Latch elements and corresponding latch engagements are well known as locking means for clip closures. Such elements can be produced at a low price and may provide sufficient force to tightly seal a bag in a closed position. Preferably, the locking means consist of interlocking shoulders with surfaces facing each other in a closed and locked position of the clip closure. By that, movement of the clamping elements to an open position is impossible without user interference. It is preferred that said surfaces are flat. In one embodiment at least one surface of a pair of surfaces facing each other may be curved. In that case it is preferred that said surface is convex. It is even more preferred that the corresponding surface of said convex surface is a concave surface. This may improve the locking. In another embodiment, it is preferred that, in a side view, the shoulders resemble a saw-tooth. Most preferably the steeper of the two ramps of each saw-tooth acts as the interlocking face. The saw-tooth may be inclined to improve the interlocking force. Furthermore, in some embodiments at least one surface is rough. For example, it may be rippled or otherwise profiled. In other embodiments, latch elements and corresponding latch engagements may be replaced by hooks so that relative movement of the clamping elements is prevented in not only one but in two directions. Other elements that can provide the necessary effects of locking means may be used as well. Furthermore, it is preferred that at least some of the two or more latch engagements are arranged in groups. It is an achievable advantage of such grouping that a fine separation between each closed position is possible. Multiple groups of latch engagements may be present in an embodiment.

Preferably, the one or more latch elements are arranged at one of the clamping elements and the two or more latch engagements are arranged at the other clamping element. By that, a proper closure of a bag may be ensured. Alternatively, the latch elements and the latch engagements may be provided on the same clamping element. For example, a stiff or elastic rope or foil can be wrapped around the clamping elements. It may begin at one end of one clamping element and end at the other end of the same element, girding the other clamping element without being arranged on it. This may as well allow forming a tight clamping gap to properly close the open end of a bag inserted between the two clamping elements.

It is preferred that the one or more latch elements are connected to one of the clamping elements via a spring plate. A spring plate may be advantageous during opening and closing the locking means. The spring plate may be bent elastically to engage and disengage the latch element to and from the latch engagement. Preferably, the spring plate has a curved shape but in another embodiment it may be flat. Alternatively, the latch element may be formed on said clamping element directly without having a spring element in between. In that case the whole clamping element may be translatable so that the latch element may be engaged or disengaged to and from its counterparts. In another embodiment the latch engagements are provided on the spring plate and the latch elements are provided on one of the clamping elements. Preferably the one or more latch elements are connected to the first clamping element via the spring plate. In some embodiments the latch elements are provided on a spring plate connected to the second clamping element. It is understood that this different placements of the latch elements and latch engagements will all lead to the same technical and functional result. To improve locking even more the spring plate may comprise both latch engagements and latch elements to interact with counterpart latch engagements and latch elements on the other clamping element.

It is preferred that the spring plate is arranged at the free end of one of the clamping elements. This may improve handling and provide a strong clamping force. Preferably, the spring plate is fixed to the free end of one of the clamping elements. Alternatively, the spring plate can be fixed to a section of the clip closure that is distant from the free end of the clamping element. Then the spring plate or an arm acting as a spring plate may extend from that section to provide the latch elements and/or the latch engagements. Preferably, this arm or spring plate in that preferred embodiment extends from a section distant from the free end of the clamping element but will provide the latch engagement and/or elements at the free end of the clamping element. This may have the advantage that the material of the arm or spring plate can be made from a comparably stiffer material than if it was mounted directly to the free end of said clamping element. If the arm or spring plate is long enough, a similar elastic effect may be obtained as can be found for a spring plate of increased elasticity but decreased length.

Preferred is that the spring plate comprises a hand grip element. This can improve the handling and lead to higher user-friendliness. Preferably, the hand grip element is formed on an outer surface of the spring plate. It is furthermore preferred that the hand grip has the form of the section of a circle. It is even more preferred that this type of hand grip is mounted to the outer surface in a way that it stands up approximately perpendicular with respect to the outer surface. Most preferred is that the hand grip is provided as a wall that is formed on the outer surface of the spring plate and forms a space so that the user may insert at least one finger into that space to be able to bend the spring plate. In that case, preferably, this wall in general is orientated in parallel to the outer surface of the spring plate, most preferred having a section that is inclined towards that outer surface.

It is preferred that the clamping element to which the spring plate is connected to consists of a different material than the spring plate itself. This way, materials may be chosen for each of the parts depending on the mechanical demands. For example, the clamping element may consist of a rigid plastic material while the spring plate may consist of a natural rubber material or other elastic material, like any elastomer provided enough force to tightly lock the clamping elements in a closed position. Preferably, the spring plate comprises a polyamide (PA), preferably a polyamide containing glass fibers, especially a fiberglass-enforced polyamide comprising 15% glass fibers (PA6-GF15). Alternatively, the spring plate may comprise PA 12 and/or acrylonitrile butadiene styrene (ABS). In an embodiment it may comprise a mixture of some or all of the said materials. Preferably it consists of just one of the said materials. Alternatively, the clamping element and the spring plate may consist of the same material if the purposes of the clamping element and of the spring plate nonetheless can be fulfilled. Both the clamping element and the spring plate may comprise or consist of ABS or of a polypropylene, preferably a reinforced polypropylene, most preferably a reinforced polypropylene comprising a certain amount of talcum, preferably more than 10% of talcum, more preferably more than 20% of talcum, even more preferred more than 35% of talcum. It is most preferred that at least the material for the clamping elements is polypropylene reinforced with 40% of talcum, also known as PP TV 40. This material may have advantageous properties for being used in a clip closure, for example a high rigidity.

In a preferred embodiment the clamping element to which the spring plate is connected to is integrally designed with the spring plate. A strong and steady connection between both parts may be achieved. Preferably, the spring plate is injection molded to the clamping element. Most preferably, both parts are cast in the same casting form. Alternatively, the elements are welded or glued to each other. Other ways of integrally designing two parts that may each consist of different materials are well known to the skilled person.

It is preferred that the clamping element to which the spring plate is connected to and the spring plate are separate parts. This may have the advantage that production can be simplified. The parts may be produced separately and assembled later or in factories that are not located in the same place. Preferably, the clamping element and the spring plate may be joined irreversibly. More preferably this is done by providing a positive-locking mechanism between the two parts in which it is impossible to decouple the interlock once it is engaged. Most preferably this mechanism is provided in a way that the spring plate has a section with a positive-locking element. The section may be shoved inside a space provided in the clamping element that has a corresponding positive-locking element or vice-versa. Preferably the positive-locking mechanism is not accessible to the user once the positive-locking element is engaged. It is an achievable advantage that this way the spring plate is firmly connected to the clamping element and may not accidentally be separated from it at a later time. Alternatively, both parts may be joined reversibly. In that case it is preferred that said interlocking mechanism is accessible for the user. Thus the positive-locking elements may be disengaged at user's discretion. This may allow to, for example, replace the spring plate if it becomes too elastic over time so that the force exerted between the locking means falls below a critical limit.

Preferably, in a cross sectional view the two or more latch engagements have a saw-tooth-like profile. Such a profile may be advantageous as it is easy to produce and may provide good interlocking abilities between the locking means. Preferably, there are three latch engagements. By that, three different closed positions may be achieved for three types of bags with differently sized open ends. In some embodiments there may be four, five, six or more latch engagements. According to the mentioned options, in a cross section view this would result in a profile of three, four, five, six or more saw-teeth arranged next to each other. Some or all of the saw-tooth-like protrusions may be skewed. Preferably, the latch engagements have a saw-tooth like profile and the latch elements have a saw-tooth like profile. Then surfaces of the saw-teeth may advantageously interlock to lock the clamping means in a closed position. The latch engagements and the clamping element to which it is mounted are separate parts. The latch engagements are removably mounted to the clamping element. By that, they can easily be replaced, for example if they wore off during extensive use. They may be clipped to the clamping element or can be fixed by screws or similar means. Preferably, the latch engagements comprise a polyamide (PA), preferably a polyamide containing glass fibers, especially PA6-GF15. Alternatively, the latch engagements may comprise PA 12, a polypropylene, especially PP TV40 and/or ABS. In some embodiments they may comprise a mixture of some or all of the said materials. Preferably, they consist of just one of the said materials. Preferably, the latch engagements are made of the same material as the latch elements. In certain embodiments the latch engagements may have different shapes like rectangular protrusions, hooks or pins arranged next to each other. Regardless of the shape of the latch engagements they can be engaged by counterpart latch elements suited to provide two or more closed positions in which the clamping means may be locked. In an embodiment the latch engagements may be formed integrally with the clamping element.

Preferably, the clamping element on which the two or more latch engagements are arranged at comprises additional means for stabilizing the spring plate in a lateral direction with respect to the two or more latch engagements for when the clip closure is in a closed position and the clamping means are locked. This may have the advantage that stability can be improved. Preferably, the stabilization is effective especially against skewing forces. Such forces might be caused when a heavy bag is closed by the clip closure and then shall be carried away using the clip closure as a handle. Preferably, the means for stabilizing the spring plate are formed as shoulders. Preferably, the means are directly adjacent laterally to the latch engagements. An achievable advantage of this embodiment is that the spring plate may have at least one latch element across the whole surface facing the latch engagements in a closed and locked position. Thus a large locking force between the locking means may be created while having additional lateral stabilization for the spring plate right next to the ends of the latch elements. In an embodiment the latch elements themselves may interact with the stabilizing means, further increasing the force exerted against the skewing forces.

It is preferred that when the clamping means are locked in at least one of the closed positions, the additional means for stabilizing the spring plate and at the same height as or surpass the height of the second surface of the spring plate that is facing away from a first surface of the spring plate on which the one or more latch elements are arranged. This may have the advantage that stability can further be improved. Furthermore, the esthetical appearance of the clip closure may be improved, especially in the case when the spring plate has a curved shape. Then the means for stabilizing the spring plate would preferably have a curved shape as well. Preferably, in that case they end at the same height as the second surface of the spring plate.

It is preferred that the clip closure comprises a carrying handle. By this user friendliness may be improved, especially in a case when the user wants to carry a bag that is locked by the clip closure. Preferably, the handle is fixed to one of the clamping elements. In an embodiment the handle is hinged to one clamping element and can be swiveled to be additionally connected to the second element, further tightening the clamping elements in a closed position by straddling the clamping gap. Several embodiments for a clip closure with such a carrying handle are known from the German patent DE 10 2004 018 589 A1 which is incorporated herein by reference. The handle may be a rigid handle. Preferably it is made of the same material as the clamping element it is provided on. Most preferably the handle is made of ABS or PP TV40. In another embodiment the handle may be a flexible handle. A suitable material for such a flexible handle is an elastomer. Alternatively, a rubber compound or rubber may be used. If the handle is flexible it may be stored advantageously inside a clamping element. This may be achieved by flattening the handle by pressing it towards the surface of the clamping element, thus sliding sections of the handle into the clamping element through slots provided in said clamping element.

Preferably, the carrying handle is a separate part which is irreversibly connectable by the user to at least one of the clamping elements by connecting first coupling means to second coupling means, the first coupling means being arranged at the carrying handle and the second coupling means being arranged at at least one of the clamping elements of the clip closure. This may improve handling during transport. The dimensions of the retail box can be optimized so that more retail boxes could be transported per container unit. Thus the retail price may be lowered. The user can install the handle after unpacking the clip closure. The coupling means may be designed in a way that is impossible to uninstall the handle again. This can lower the risk that the handle disengages even when large and/or heavy bags, like bags filled with cement, animal feed or sand, are to be locked and carried. Alternatively, clamping element and handle may be joined reversibly. In that case, one handle may be used on multiple clip closures serially, for example when many bags have to be carried one after another. This can be advantageous for example at a construction site.

### Brief description of the drawings

Fig. 1 shows a top view of an embodiment of a clip closure according to the invention;
Fig. 2 shows a detailed perspective view of an embodiment of locking means of said clip closure;
Fig. 3 shows a top view of another embodiment of said clip closure;
Fig. 4 shows a detailed perspective view of another embodiment of locking means of said clip closure;
Fig. 5 shows, in a perspective view, an embodiment of a hand grip element at a spring plate of a clip closure according to the invention;
Fig. 6 shows two embodiments of such a hand grip element in different perspectives;
Fig. 7 shows, in a perspective view, an embodiment of a positive-lock mechanism for fixing the spring plate to a clamping element of said clip closure;
Fig. 8 shows, in a perspective view, an embodiment of a carrying handle for said clip closure;
Fig. 9 shows, in a perspective view, another embodiment of such a carrying handle.

### Detailed description of preferred embodiments

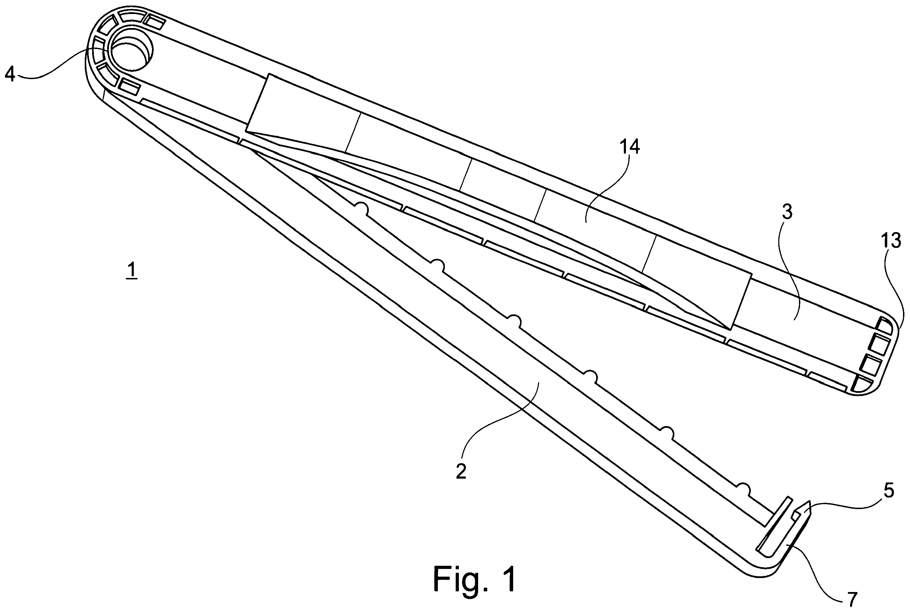

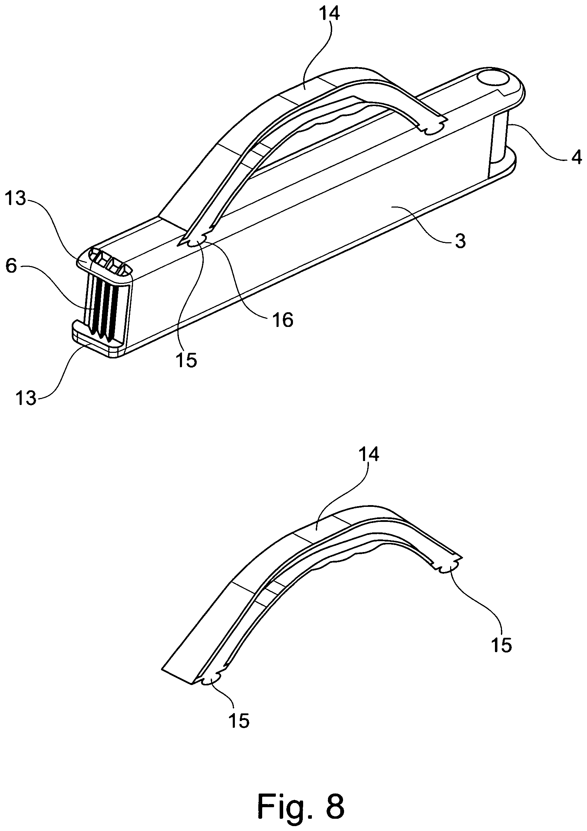

The Figs. 1 to 9 show different embodiments of a clip closure 1 according to the invention and details of features important for such a clip closure 1.

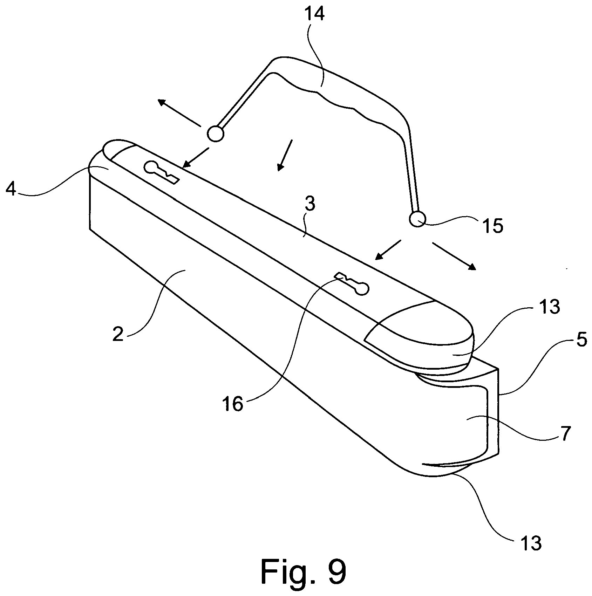

As shown in Fig. 1, a clip closure 1 for a bag has adjustable clamping means which comprise an elongated, rectangular shaped first clamping element 2 and a corresponding second clamping element 3. The first clamping element 2 and the second clamping element 3 are hinged together on one of their ends at a hinge section 4. They each have an open end that feature locking means comprising a latch element 5 and latch engagements 6 for locking the clamping means in a closed position. Such a closed position is shown in Fig. 9, while Fig. 1 shows the open position of the clip closure 1. In the open position, the first clamping element 2 and the second clamping element 3 can accommodate an open end section of a bag. From the open position, the first clamping element 2 and the second clamping element 3 can be pivoted to a closed position so that they can clamp said open end section of said bag between each other in a clamping cap formed between the first clamping element 2 and the second clamping element 3. The clamping means can be locked in any of the closed positions by the latch element 5 and the latch engagements 6 which form the locking means of a clip closure 1 in this embodiment of the invention. The different closed positions are defined by the different angular distances between the first clamping element 2 and the second clamping element 3 at which the latch element 5 and the latch engagements 6 can be engaged.

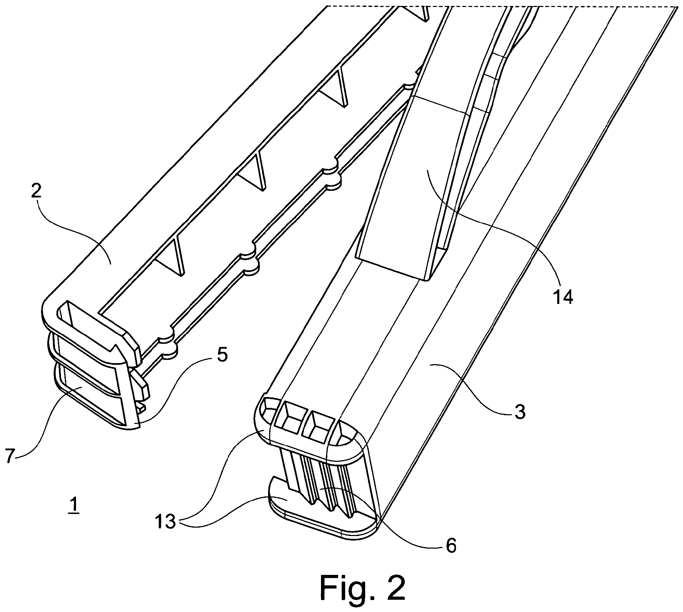

The locking means are shown in detail in Fig. 2. They comprise one latch element 5 that is arranged at the first clamping element 2 and three latch engagements 6 that are arranged in a group at the second clamping element 3. A fourth latch engagement 6 is formed separately from said group by the corner section of the second clamping element 3.

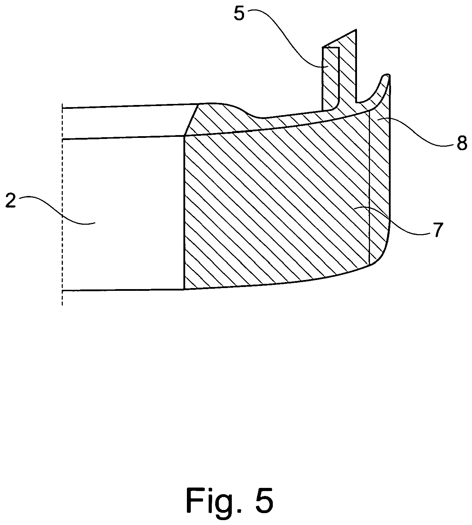

The latch element 5 is arranged on a spring plate 7 which itself is arranged at the free and of the first clamping element 2. The spring plate 7 and the first clamping element 2 are integrally designed. Nonetheless the spring plate 7 and the first clamping element 2 to which the spring plate 7 is connected to consist of different materials. This is illustrated especially in Fig. 5. In this embodiment both clamping elements consist of PP TV40 plastic, while the spring plate 7 and the latch element 5 consist of fiber-reinforced polyamide comprising 15% of glass fiber, PA6-GF15. Because of this selection of materials, the first clamping element 2 and the second clamping element 3 are rigid while the spring plate 7 is flexible. This allows user-induced bending of the spring plate 7 in order to properly connect the latch element 5 with any of the latch engagements 6 on the second clamping element 3 for locking the clamping elements 1, 2 in any of the possible closed positions.

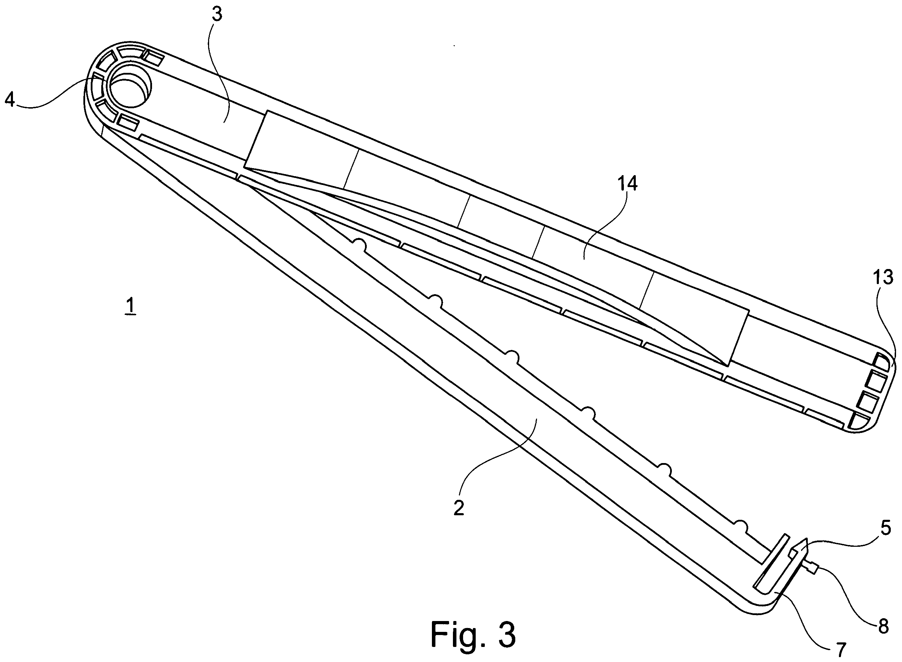

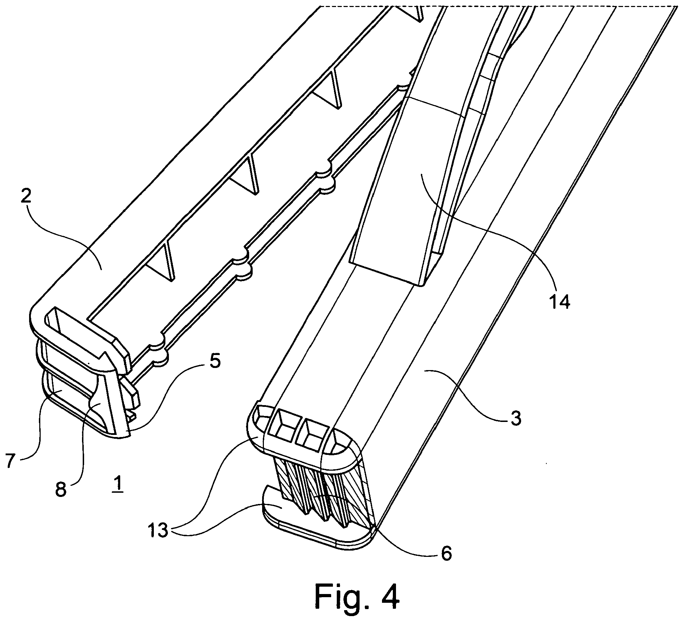

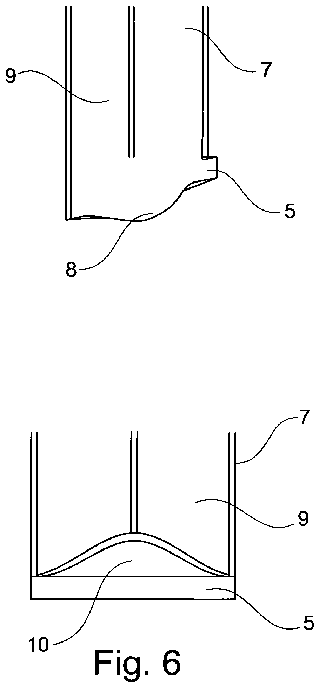

As shown for example in Fig. 3 and Fig. 5, a hand grip element 8 can be arranged at the spring plate 7. With the hand grip element 8, the user can easily bend the spring plate 7 in order to attach or detach the latch element 5 to any of the latch engagements 6. In one embodiment the hand grip element 8 has the form of the section of a circle as can be seen in Fig. 4. In other embodiments, two of which are shown in Figs. 3 and 5, the hand grip element 8 has the form of a bar. As shown in Fig. 6, in embodiments of the invention, the hand grip element 8 is provided as a wall 9 that is formed on the outer surface of the spring plate 7 and forms a space 10 between that wall 9 and the spring element. By that the user may insert at least one finger into that space 10 to be able to bend the spring plate 7. The wall 9 in general is orientated in parallel to the outer surface of the spring plate 7 and has a section that is inclined towards that outer surface.

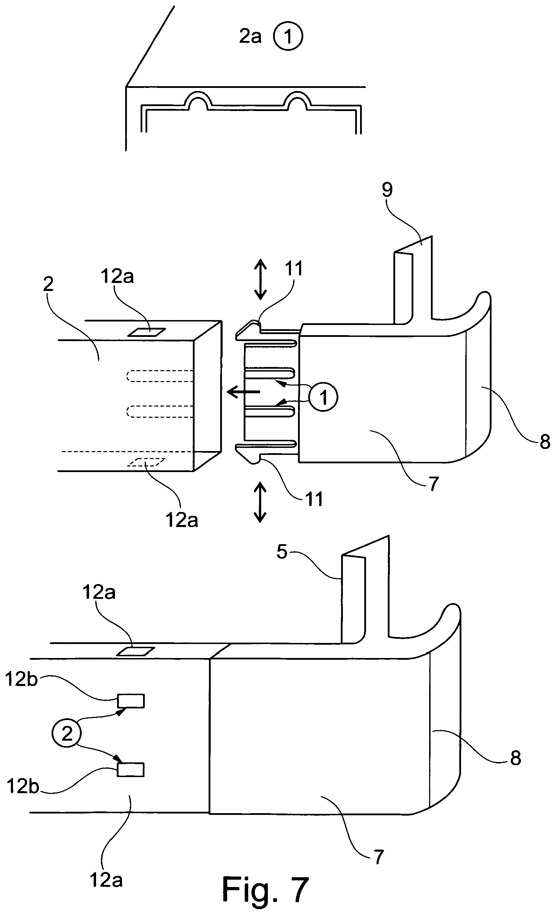

It is possible to have the spring plate 7 and the clamping element 2, 3 to which the spring plate 7 is connected to as separate parts. This is shown in Fig. 7. The spring plate 7 may be reversibly or irreversibly connectable. In Fig. 7 a reversible connection is shown. The spring plate 7 can be partially inserted into the first clamping element 2. Guiding channels may be provided in the clamping element 2, 3 to enhance gliding of the spring plate 7. Flexible hooks 11 engage a positive-locking mechanism which features openings 12a, 12b in the first clamping element 2 that can accommodate said hooks 11. To disengage the positive-locking mechanism the user may push back the hooks 11 through the openings 12a, 12b and at the same time pull out the spring plate 7 from the first clamping element 2. If the connection of the first clamping element 2 and the spring plate 7 shall be irreversible the openings 12a, 12b in the first clamping element 2 can have a cover so that the user can not push out the hooks 11 from the openings 12a, 12b of the positive-lock anymore.

In Fig. 4, the group of three latch engagements 6 which are arranged at the second clamping element 3 is held in place releasably. This allows replacing those latch engagements 6 in case they become damaged after prolonged use. In this embodiment, the group of latch engagements 6 is provided on a releasable plate that can be slided onto and off from the free end of the second clamping element 3. In Fig. 2 an embodiment is shown in which the group of three latch engagements 6 cannot be separated from the second clamping element 3. By that, the production of the clip closure may be simplified. In both embodiments, the group of three latch engagements 6 has a sawtooth-like profile. This allows proper interlocking between those latch engagements 6 and the latch element 5 arranged on the spring plate 7.

To stabilize the locking mechanism the second clamping element 3 comprises additional means 13 for stabilizing the spring plate 7 in a lateral direction with respect to the latch engagements 6 when the clip closure 1 is in a closed position and the clamping means are locked. In this embodiment the means 13 for stabilizing the spring plate 7 are shoulders which are formed next to the latch engagements 6. By this, the shoulders can counteract skewing forces exerted on the locking mechanism. Those forces may occur when heavy bags shall be carried with the clip closure 1.

Certain embodiments of the invention feature a carrying handle 14. As shown in Figs. 1, 2, 3, 4 and 8, the carrying handle 14 may be a stiff carrying handle 14. In that embodiment it is made from PP TV40 plastic just as the first clamping element 2 and the second clamping element 3 are. The carrying handle 14 is a separate part which the user can connect reversibly to the second clamping element 3 by connecting first coupling means 15 to second coupling means 16, the first coupling means 15 being arranged at the carrying handle 14 and the second coupling means 16 being arranged at the second clamping element 3. The carrying handle 14 can be slided onto the second clamping element 3 from a side-ways direction with respect to the longitudinal extension of the second clamping element 3. If the carrying handle 14 is not needed, for example because a bag that was closed by a clip closure 1 shall be stored in a restricted space, the carrying handle 14 may be temporarily removed. The clip closure 1 may as well be delivered without the carrying handle 14 connected to the second clamping element 3. Thus a smaller retail package may be provided. The user can then mount the carrying handle 14 after unpacking the clip closure 1 from the retail box.

Fig. 9 shows a reversibly connectable carrying handle 14 that is made from a flexible material. This allows constructing a clip closure 1 that has less weight. It is held on the second clamping element 3 by first coupling means 15 provided at both ends of the flexible carrying handle 14 and second coupling means 16 provided on the second clamping element 3. Barbs located in the second coupling means 16 reduce the risk of an accidental disconnect of the carrying handle 14 and the second clamping element 3. The carrying handle 14 remains removable at user's discretion though. In this embodiment the carrying handle 14 is made from rubber.

It is understood that the separate carrying handle 14 can be irreversibly connectable by the user. For example, the slots that in this embodiment form the second coupling means 16 in the second clamping element 3 can be designed in a way that the first coupling means 15 can only be moved through the slots in one direction and not be pulled out through those slots in the other direction. To achieve that, the barbs or similar elements can be designed in a way that removal of the carrying handle 14 is impossible.

When the flexible carrying handle 14 as shown in Fig. 9 is not needed it can be pushed towards the surface of the second clamping element 3. By that, sections of the carrying handle 14 are pushed into the slots of the second coupling means 16. When the user then wants to carry the clip closure 1 by holding it on the carrying handle 14 at a later timer, he may simply pull the carrying handle 14 upwards from the surface of the second clamping element 3. Thus the sections of the carrying handle 14 that were stored inside the second clamping element appear again until the slots of the second coupling means 16 prevent the first coupling means 15 from moving further outwards the slots.

The invention is not limited to the previous embodiments and various alternatives falling into the scope of the invention are possible. Furthermore the features presented in this description, in the preferred embodiments, in the claims and in the figures can be combined in any possible combination and are not limited to the combinations shown herein.

### List of references

- 1: clip closure
- 2: first clamping element
- 3: second clamping element
- 4: hinge section
- 5: latch element
- 6: latch engagements
- 7: spring plate
- 8: hand grip element
- 9: wall
- 10: space
- 11: hooks
- 12a, b: openings
- 13: stabilizing means
- 14: carrying handle
- 15: first coupling means
- 16: second coupling means

## Claims

1. A clip closure (1) for a bag
having adjustable clamping means which have an open position and a closed position, the clamping means in their open position being placeable over the open end section of a bag and in their closed position surrounding and trapping said open end section in the style of a collar,
wherein the clamping means comprise a first clamping element (2) and a second clamping element (3) which are pivotably hinged to each other so that they can accommodate said open end section of said bag in the open position of the clamping means and so that they can clamp said open end section of said bag between each other in the closed position in a clamping gap formed between the first clamping element (2) and the second clamping element (3),
the clip closure (1) having locking means for locking the clamping means in any of two or more closed positions, which are **characterised by** different widths of the clamping gap, the locking means comprising one or more latch elements (5) and two or more latch engagements (6) which can interact with each other in order to lock the first clamping element (2) to the second clamping element (3),
**characterised in that**
the latch engagements (6) are removably mounted to one of the clamping elements (2, 3).

2. A clip closure according to claim 1, **characterised in that**
the one or more latch elements (5) are arranged at one of the clamping elements (2, 3) and the two or more latch engagements (6) are arranged at the other clamping element (2, 3) and/or the one or more latch elements (5) are connected to one of the clamping elements (2, 3) via a spring plate (7).

3. A clip closure according to claim 2, **characterised in that**
the clamping element (2, 3) to which the spring plate (7) is connected to and the spring plate itself (7) are separate parts.

4. A clip closure according to claim 2 or 3, **characterised in that**
the spring plate (7) comprises a hand grip element (8) and/or the clip closure (1) comprises a carrying handle (14) and/or the spring plate (7) is arranged at the free end of one of the clamping elements (2, 3).

5. A clip closure according to claim 4, **characterised in that**
the hand grip element (8) is formed on an outer surface of the spring plate (7) and the clamping element (2, 3) to which the spring plate (7) is connected to is integrally designed with the spring plate (7).

6. A clip closure according to any of the claims 2 to 5, **characterised in that**
the spring plate (7) is arranged at the free end of one of the clamping elements (2, 3), wherein the clamping element (2, 3) to which the spring plate (7) is connected to and the spring plate itself (7) are separate parts, the clamping element (2, 3) and the spring plate (7) being joined irreversibly by providing a positive-locking mechanism between the two parts.

7. A clip closure according to any of the claims 2 to 6, **characterised in that**
the clamping element (2, 3) to which the spring plate (7) is connected to consists of a different material than the spring plate (7) itself.

8. A clip closure (1) according to any of the claims 2 to 7, **characterised in that** the clamping element (2, 3) to which the spring plate (7) is connected to and the spring plate (7) comprise a polypropylene.

9. A clip closure according to any of the preceding claims, **characterised in that**
the one or more latch elements (5) are connected to one of the clamping elements (2, 3) via a spring plate (7), wherein the clamping element (2, 3) to which the spring plate (7) is connected to is integrally designed with the spring plate (7) and/or the two or more latch engagements (6) have a sawtooth-like profile in a cross section view.

10. A clip closure according to any of the claims 2 to 9, **characterised in that**
the clamping element (2, 3) to which the spring plate (7) is connected to and the spring plate itself (7) are separate parts, the clamping element (2, 3) and the spring plate (7) being joined irreversibly by providing a positive-locking mechanism between the two parts.

11. A clip closure according to any of the claims 2 to 10, **characterised in that,** the clamping element on which the two or more latch engagements (6) are arranged at comprises additional means (13) for stabilizing the spring plate (7) in a lateral direction with respect to the two or more latch engagements (6) for when the clip closure is in a closed position and the clamping means are locked.

12. A clip closure according to claim 11, **characterised in that**
when the clamping means are locked in at least one of the closed positions the additional means (13) for stabilizing the spring plate (7) end at the same height as or surpass the height of a second surface of the spring plate (7) that is facing away from a first surface of the spring plate (7) on which the one or more latch elements (5) are arranged.

13. A clip closure (1) according to any of the preceding claims, **characterised in that** the clip closure (1) comprises a carrying handle (14), the carrying handle (14) being a separate part which is irreversibly connectable by the user to at least one of the clamping elements (2, 3) by connecting first coupling means (15) to second coupling means (16), the first coupling means (15) being arranged at the carrying handle (14) and the second coupling means (16) being arranged at at least one of the clamping elements (2, 3) of the clip closure.

14. A clip closure (1) according to any of the preceding claims, **characterised in that** the clip closure (1) comprises a flexible carrying handle (14).

## Patentansprüche

1. Klemmverschluss (1) für einen Beutel
mit einstellbaren Klemmmitteln, die eine Offenstellung und eine Schließstellung aufweisen, wobei die Klemmmittel in ihrer Offenstellung über dem offenen Endabschnitt eines Beutels angeordnet werden können und in ihrer Schließstellung den offenen Endabschnitt nach Art eines Kragens umfassen und erfassen,
wobei die Klemmmittel ein erstes Klemmelement (2) und ein zweites Klemmelement (3) aufweisen, die schwenkbar aneinander angelenkt sind, sodass sie den offenen Endabschnitt des Beutels in der Offenstellung der Klemmmittel aufnehmen können und in der Schließstellung in dem zwischen dem ersten Klemmelement (2) und dem zweiten Klemmelement (3) gebildeten Klemmspalt zwischen sich festklemmen können (1),
der Klemmverschluss (1) Verriegelungsmittel zum Verriegeln der Klemmmittel in irgendeiner von zwei oder mehr Schließstellungen umfasst, die durch unterschiedliche Weiten des Klemmspalts ausgezeichnet sind, und
die Verriegelungsmittel ein oder mehrere Rastelemente (5) und zwei oder mehr Rastverriegelungen (6) umfassen, die zusammenwirken können, um das erste Klemmelement (2) mit dem zweiten Klemmelement (3) zusammenzuschließen, **dadurch gekennzeichnet, dass**
die Rastverriegelungen (6) abnehmbar an einem der Klemmelemente (2, 3) angebracht sind.

2. Klemmverschluss nach Anspruch 1, **dadurch gekennzeichnet, dass** die einen oder mehreren Rastelemente (5) an einem der Klemmelemente (2, 3) und die zwei oder mehr Rastverriegelungen (6) an dem anderen Klemmelement (2, 3) angeordnet sind und/ oder die einen oder mehreren Rastelemente (5) mit einem der Klemmelemente (2, 3) über eine Federplatte (7) verbunden sind.

3. Klemmverschluss nach Anspruch 2, **dadurch gekennzeichnet, dass** das Klemmelement (2, 3), mit dem die Federplatte (7) verbunden ist, und die Federplatte selbst (7) getrennte Teile sind.

4. Klemmelement nach Anspruch 2 oder 3, **dadurch gekennzeichnet, dass** die Federplatte (7) ein Handgriffelement (8) umfasst und/ oder der Klemmverschluss (1) einen Tragegriff (14) umfasst und/ oder die Federplatte (7) an dem freien Ende eines der Klemmelemente (2, 3) angeordnet ist.

5. Klemmverschluss nach Anspruch 4, **dadurch gekennzeichnet, dass** das Handgriffelement (8) an einer Außenfläche der Federplatte (7) angeordnet und das Klemmelement (2, 3), mit dem die Federplatte (7) verbunden ist, einteilig mit der Federplatte (7) gebildet ist.

6. Klemmverschluss nach einem der Ansprüche 2 bis 5, **dadurch gekennzeichnet, dass** die Federplatte an dem freien Ende eines der Klemmelemente (2, 3) angeordnet ist, wobei das Klemmelement (2, 3), mit dem die Federplatte (7) verbunden ist, und die Federplatte selbst (7) getrennte Teile sind, und das Klemmelement (2, 3) und die Federplatte (7) durch einen formschlüssigen Mechanismus zwischen den beiden Teilen unumkehrbar verbunden sind.

7. Klemmverschluss nach einem der Ansprüche 2 bis 6, **dadurch gekennzeichnet, dass** das Klemmelement (2, 3), mit dem die Federplatte (7) verbunden ist, aus einem anderen Material besteht, als die Federplatte (7) selbst.

8. Klemmverschluss (1) nach einem der Ansprüche 2 bis 7, **dadurch gekennzeichnet, dass** das Klemmelement (2, 3), mit dem die Federplatte (7) verbunden ist, und die Federplatte (7) ein Polypropylen umfassen.

9. Klemmverschluss nach einem der vorangehenden Ansprüche, **dadurch gekennzeichnet, dass** die einen oder mehreren Rastelemente (5) mit einem der Klemmelemente (2, 3) über eine Federplatte (7) verbunden sind, wobei das Klemmelement (2, 3), mit dem die Federplatte (7) verbunden ist, einteilig mit der Federplatte (7) ausgebildet ist und/ oder die zwei oder mehr Rastverriegelungen (6) in Querschnittsansicht ein sägezahnartiges Profil bilden.

10. Klemmverschluss nach einem der Ansprüche 2 bis 9, **dadurch gekennzeichnet, dass** das Klemmelement (2, 3), mit dem die Federplatte (7) verbunden ist, und die Federplatte selbst (7) getrennte Teile sind, wobei das Klemmelement (2, 3) und die Federplatte (7) durch einen formschlüssigen Mechanismus zwischen den beiden Teilen unumkehrbar verbunden sind.

11. Klemmverschluss nach einem der Ansprüche 2 bis 10, **dadurch gekennzeichnet, dass** das Klemmelement, auf dem die zwei oder mehr Rastverriegelungen (6) angeordnet sind, weitere Mittel (13) aufweisen, um die Federplatte (7) in seitlicher Richtung bezüglich der zwei oder mehr Rastverriegelungen (6) zu stabilisieren, wenn der Klemmverschluss sich in einer geschlossenen Position befindet und die Klemmmittel zusammengeschlossen sind.

12. Klemmverschluss nach Anspruch 11, **dadurch gekennzeichnet, dass** wenn die Klemmmittel in wenigstens einer der Schließstellungen zusammengeschlossen sind, die weiteren Mittel (13) zum Stabilisieren der Federplatte (7) auf gleicher Höhe enden wie eine zweite Fläche der Federplatte (7), oder diese in der Höhe überragen, wobei die zweite Fläche von der ersten Fläche der Federplatte (7), auf der die einen oder mehreren Rastelemente (5) angeordnet sind, weg weist.

13. Klemmverschluss (1) nach einem der vorangehenden Ansprüche, **dadurch gekennzeichnet, dass** der Klemmverschluss (1) einen Tragegriff (14) umfasst, wobei der Tragegriff (14) ein getrennter Teil ist, der vom Benutzer unumkehrbar mit wenigstens einem der Klemmelemente (2, 3) verbunden werden kann, indem er erste Verbindungsmittel (15) mit zweiten Verbindungsmitteln (16) verbindet, wobei die ersten Verbindungsmittel (15) auf dem Tragegriff (14) und die zweiten Verbindungsmittel (16) an wenigstens einem der Klemmelemente (2, 3) des Klemmverschlusses angeordnet sind.

14. Klemmverschluss (1) nach einem der vorangehenden Ansprüche, **dadurch gekennzeichnet, dass** der Klemmverschluss einen flexiblen Tragegriff (14) umfasst.

## Revendications

1. Une fermeture à clip (1) pour un sac munie de moyens de serrage ajustables ayant une position ouverte et une position fermée, les moyens de serrage dans leur position ouverte pouvant être placés sur la section de l'extrémité ouverte d'un sac et dans leur position fermée entourant et enserrant la section de l'ouverture ouverte à la manière d'un col, sachant que les moyens de serrage comprennent un premier élément de serrage (2) et un second élément de serrage (3) pivotant l'un par rapport à l'autre comme une charnière de sorte qu'ils peuvent recevoir ladite section de l'extrémité ouverte dudit sac quand les moyens de serrage sont en position ouverte et de sorte qu'ils peuvent serrer ladite section de l'extrémité ouverte entre eux en position fermée dans une fente de serrage formée entre le premier élément de serrage (2) et le second élément de serrage (3), la fermeture à clip (1) ayant des moyens de verrouillage pour verrouiller les moyens de serrage dans l'une ou l'autre position fermée ou plus, qui sont **caractérisées par** des largeurs différentes de la fente de serrage, les moyens de verrouillage comprenant un élément de verrouillage (5) ou plusieurs et deux parties d'engagement des verrous ou plus (6) qui peuvent interagir entre eux afin de verrouiller le premier élément de serrage (2) avec le second élément de serrage (3)
**caractérisée en ce que**
les parties d'engagement des verrous (6) sont montées de façon amovible sur un des éléments de serrage (2,3).

2. Une fermeture à clip selon la revendication 1, **caractérisée en ce que** ledit un élément de verrouillage (5) ou plusieurs sont positionnés sur un des éléments de serrage (2,3) et les deux parties d'engagement des verrous (6) ou plus sont positionnées sur l'autre élément de serrage (2,3) et/ou ledit un élément de verrouillage (5) ou plusieurs sont connectés à un des éléments de serrage (2,3) au moyen d'une lame de ressort (7).

3. Une fermeture à clip selon la revendication 2, **caractérisée en ce que** l'élément de serrage (2,3) auquel la lame de ressort (7) est connectée et la lame de ressort elle-même (7) sont des pièces séparées.

4. Une fermeture à clip selon la revendication 2 ou 3, **caractérisée en ce que** la lame de ressort (7) comporte un élément de préhension (8) et/ou la fermeture à clip (1) comporte une poignée de transport (14) et/ou la lame de ressort (7) est positionnée à l'extrémité libre d'un des éléments de serrage (2,3).

5. Une fermeture à clip selon la revendication 4, **caractérisée en ce que l**'élément formant poignée de préhension (8) est formé sur une surface extérieure de la lame de ressort (7) et l'élément de serrage (2,3) auquel la lame de ressort (7) est connectée ne fait qu'un avec la lame de ressort (7).

6. Une fermeture à clip selon une des revendications 2 à 5, **caractérisée en ce que** la lame de ressort (7) est positionnée à l'extrémité libre de l'un des éléments de serrage (2,3), l'élément de serrage (2,3) auquel la lame de ressort (7) est connectée et la lame elle-même (7) étant des pièces séparées, l'élément de serrage (2,3) et la lame de ressort (7) étant rendus irréversiblement solidaires par un mécanisme de verrouillage positif entre les deux pièces.

7. Une fermeture à clip selon une des revendications 2 à 6, **caractérisée en ce que** l'élément de serrage (2,3) auquel la lame de ressort (7) est connectée est en un matériau différent de celui de la lame de ressort (7) elle-même.

8. Une fermeture à clip (1) selon une des revendications 2 à 7, **caractérisée en ce que** l'élément de serrage (2,3) auquel la lame de ressort (7) est connectée et la lame de ressort (7) comprennent un polypropylène.

9. Une fermeture à clip selon une quelconque des revendications précédentes, **caractérisée en ce que** ledit un élément de verrouillage (5) ou plusieurs sont connectés à un des éléments de serrage (2,3) au moyen d'une lame de ressort (7), l'élément de serrage (2,3) auquel la lame de ressort (7) est connectée ne faisant qu'un avec la lame de ressort (7) et/ou les deux parties d'engagement des verrous (6) ou plus ayant un profil en dent de scie vues en coupe.

10. Une fermeture à clip selon une quelconque des revendications 2 à 9, **caractérisée en ce que** l'élément de serrage (2,3) auquel la lame de ressort (7) est connectée et la lame de ressort (7) elle-même sont des pièces séparées, l'élément de serrage (2,3) et la lame de ressort (7) étant rendus irréversiblement solidaires au moyen d'un mécanisme de verrouillage positif entre les deux pièces.

11. Une fermeture à clip selon une quelconque des revendications 2 à 10, **caractérisée en ce que** l'élément de serrage sur lequel les deux parties d'engagement des verrous (6) ou plus sont positionnées, comportent des moyens additionnels (13) de stabilisation de la lame de ressort (7) dans une direction latérale par rapport aux deux parties d'engagement des verrous (6) ou plus pour le cas où la fermeture à clip est en position fermée et les moyens de serrage sont verrouillés.

12. Une fermeture à clip selon la revendication 11, **caractérisée en ce que,** quand les moyens de serrage sont verrouillés dans au moins une des positions fermées, les moyens additionnels (13) de stabilisation de la lame de ressort (7) se terminent à la même hauteur ou dépasse la hauteur d'une deuxième surface de la lame de ressort (7) opposée à la première surface de la lame de ressort (7) sur laquelle sont positionnés l'élément de verrouillage (5) ou plusieurs.

13. Une fermeture à clip (1) selon une quelconque des revendications précédentes, **caractérisée en ce que** la fermeture à clip (1) comporte une poignée de transport (14), la poignée de transport (14) étant une pièce séparée qui peut être connectée de façon irréversible par l'utilisateur à au moins un des moyens de serrage (2,3) en connectant les premiers moyens d'accouplement (15 )aux seconds moyens d'accouplement (16), les premiers moyens d'accouplement (15) étant positionnés sur la poignée de transport (14) et les seconds moyens d'accouplement (16) étant positionnés sur au moins un des éléments de serrage (2,3) de la fermeture à clip.

14. Une fermeture à clip (1) selon une des revendications précédentes, **caractérisée en ce que** la fermeture à clip (1) comporte une poignée de transport souple (14).
